# EUROPÄISCHE PATENTSCHRIFT

(11) **EP 3 904 985 B1**
(45) Veröffentlichungstag und Bekanntmachung des Hinweises auf die Patenterteilung: **20.08.2025**
(21) Anmeldenummer: 20172499.4
(22) Anmeldetag: 30.04.2020
(51) Int. Cl.: G05B 19/418

(54) **ÄNDERUNGSVERFOLGUNG VON PROJEKTIERUNGSDATEN EINES LEITSYSTEMS EINER TECHNISCHEN ANLAGE**
TRACKING OF CHANGES IN PLANNING DATA OF A CONTROL SYSTEM OF A TECHNICAL INSTALLATION
SUIVI DE MODIFICATIONS DES DONNÉES DE PROJECTION D'UN SYSTÈME DE COMMANDE D'UNE INSTALLATION TECHNIQUE

(43) Veröffentlichungstag der Anmeldung: 03.11.2021
(73) Patentinhaber: Siemens Aktiengesellschaft, 80333 München (DE)
(72) Erfinder: Lutz, Benjamin, 76327 Pfinztal (DE)
(74) Vertreter: Siemens Patent Attorneys

(56) Entgegenhaltungen:
- WO-A1-01/65322
- SIEMENS: "CFC for SIMATIC S7 V9.0 SP3 03/2019", 1 March 2019 (2019-03-01), pages 397 - 399, XP055738666, Retrieved from the Internet <URL:https://support.industry.siemens.com/cs/attachments/109765729/s7cfcs7b_en-US.pdf> [retrieved on 20201012]
- SIEMENS: "SIMATIC PCS 7 Process Control System Preliminary edition 2017", 1 January 2017 (2017-01-01), pages 1 - 3, XP055738677, Retrieved from the Internet <URL:https://www.automation.siemens.com/w2/efiles/pcs7/pdf/76/KG_STPCS7_2017-V_en_Web.pdf> [retrieved on 20201012]

## Beschreibung

Die Erfindung betrifft ein Leitsystem für eine technische Anlage, insbesondere eine Fertigungs- oder Prozessanlage, das wenigstens einen Engineering Station Server zum Erstellen einer Projektierung für Komponenten der technischen Anlage und wenigstens einen Operator Station Server zum Bedienen und Beobachten der projektierten Komponenten der technischen Anlage aufweist, mit den Merkmalen des Anspruchs 1. Außerdem betrifft die Erfindung ein Verfahren zum Übertragen einer geänderten Projektierung von Komponenten einer technischen Anlage von einem Engineering Station Server der technischen Anlage zu einem Operator Station Server der technischen Anlage mit den Merkmalen des Anspruchs 5.

Im Lebenszyklus einer verfahrenstechnischen Anlage werden die Projektierung der Anlage sowie das "Bedienen und Beobachten" kontinuierlich angepasst, verbessert und ergänzt. Zumeist werden hierfür in die verfahrenstechnische Anlage im laufenden Betrieb Automatisierungsprogramme, Anlagenbilder, Prozessobjekte, usw. hinzugenommen, weggenommen oder abgeändert. Zwecks Nachvollziehbarkeit werden hierfür während einer Projektierungsphase in einem Engineering Station Server die unterschiedlichen Projektierungsversionen versioniert und archiviert.

Die an einer Anlage vorgenommenen Änderungen sind jedoch auch für die Operatoren bei der Bedienung und Beobachtung von höchster Bedeutung. Nach dem Stand der Technik werden die Operatoren mündlich, durch Übergabebücher oder ähnlichem über die an der Projektierung vorgenommenen Änderungen informiert. Diese Praxis ist jedoch wenig effizient und fehleranfällig. Ein Operator der technischen Anlage kann nur sehr mühselig und aufwändig nachvollziehen, welche Änderungen mit dem letzten Ladevorgang der Projektierung verbunden sind und wie er damit umzugehen hat.

Der Erfindung liegt die Aufgabe zugrunde, ein Leitsystem für eine technischen Anlage und ein dazugehöriges Verfahren anzugeben, die einem Operator des Leitsystems einfacher und effizienter die Änderungen anzeigen können, die an einer Projektierung der technischen Anlage vorgenommen worden sind. Diese Aufgabe wird gelöst durch ein Leitsystem für eine technische Anlage mit den Merkmalen des Anspruchs 1. Außerdem wird die Aufgabe gelöst durch ein Verfahren gemäß Anspruch 5.

Vorteilhafte Weiterbildungen ergeben sich aus den abhängigen Ansprüchen.

Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem kann Sensoren zur Ermittlung von Messwerten sowie verschiedene Aktoren umfassen. Zudem kann das Leitsystem sogenannte prozess- oder fertigungsnahe Komponenten umfassen, die zur Ansteuerung der Aktoren bzw. Sensoren dienen. Unter dem Begriff Leitsystem sind zusätzlich auch weitere Recheneinheiten für komplexere Regelungen und Systeme zur Datenspeicherung und -verarbeitung zu fassen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Unter einem "Operator Station Server" wird vorliegend ein Server verstanden, der zentral Daten eines Bedien- und Beobachtungssystems sowie in der Regel Alarm- und Messwertarchive eines (Prozess-)Leitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage an sogenannte Clients weiter, die zur Bedienung und Beobachtung eines Betriebs der einzelnen Funktionselemente der technischen Anlage dienen.

Der Operator Station Server kann über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Unter einem "Engineering Station Server" wird vorliegend ein Server verstanden, der dazu ausgebildet ist, verschiedene Hardware- und Software-Projekte für ein (Prozess-)Leitsystem einer technischen Anlage zu erstellen, verwalten, archivieren und dokumentieren. Mithilfe von speziellen Software-Entwurfswerkzeugen (Engineering Toolset) sowie vorgefertigten Bausteinen und Plänen kann mittels des Engineering Station Servers ein Zusammenspiel von leittechnischen Geräten und Einrichtungen der technischen Anlage von einem Projekteur der technischen Anlage geplant und verwaltet werden. Ein Beispiel für einen solchen Engineering Station Server ist ein SIMATIC Manager Server der Firma SIEMENS.

Unter einem Operator wird ein menschlicher Bediener der technischen Anlage bzw. des Leitsystems verstanden. Der Operator interagiert mittels spezieller Benutzerschnittstellen mit der technischen Anlage bzw. dem Leitsystem und steuert spezielle technische Funktionen der Anlage. Hierzu kann der Operator ein Bedien- und Beobachtungssystem des Leitsystems nutzen.

Bei einer Komponente kann es sich um einzelne Sensoren oder Aktoren der technischen Anlage handeln. Eine Komponente kann aber auch ein Zusammenschluss mehrerer Sensoren und/oder Aktoren sein, beispielsweise ein Motor, ein Reaktor, eine Pumpe oder ein Ventilsystem.

Der Projekteur kann in an sich bekannter Weise den Engineering Station Server des erfindungsgemäßen Leitsystems nutzen, um die Komponenten der technischen Anlage zu parametrieren, konfigurieren, programmieren und dgl., wobei hierfür vorliegend der Begriff "Projektierung" verwendet wird. Bei dem Projekteur und dem Operator handelt es sich in der Regel um zwei verschiedene Personen. Für die Erfindung ist dies jedoch nicht wesentlich. Genauso gut kann es sich bei dem Projekteur und dem Operator um ein und dieselbe Person handeln.

Erfindungsgemäß werden Änderungen, die der Projekteuer im Vergleich zu einem Referenzzustand an der Projektierung vorgenommen hat, mit einem Änderungskennzeichen versehen. Das Änderungskennzeichen weist dabei auf die an der Projektierung vorgenommenen Änderungen hin. Es kann vorteilhafterweise Informationen über eine Art der Änderung (z.B. neu hinzugekommener Sensor oder nur überarbeitete Motorsteuerung) und die von der Änderungen betroffenen Komponenten (z.B. Sensor X und Motor Y) der technischen Anlage umfassen.

Das erfindungsgemäße Leitsystem bringt den gewichtigen Vorteil mit sich, dass dem Operator automatisiert an der Projektierung vorgenommene Änderungen mitgeteilt werden können. Im Vergleich zu dem Stand der Technik müssen keine Informationen mühevoll und fehleranfällig zwischen dem Projekteur und dem Operator (händisch) ausgetauscht werden. Vielmehr erhält der Operator automatisiert eine (beispielhafte) Information darüber, welches Anlagenbild sich geändert hat oder welches Prozessobjekt in der Projektierung neu hinzugekommen ist oder dgl.

Bevorzugt umfasst das Änderungskennzeichen Kommentierungen des Projekteurs betreffend die vorgenommenen Änderungen an der Projektierung. Durch die Kommentierungen kann der Operator die vorgenommenen Änderungen noch einfacher nachvollziehen. Eine Kommentierung könnte beispielsweise lauten: "Anlagenbild um eine Füllstandsanimation in Abhängigkeit eines Prozessobjekts Z erweitert".

Der Operator Station Server ist dazu ausgebildet, dem Operator die von dem empfangenen Änderungskennzeichen umfassten Informationen visuell darzubieten, um dem Operator eine schnelle Erfassung der von dem Projekteur an der Projektierung der Komponenten der technischen Anlage vorgenommenen Änderungen zu ermöglichen. Hierzu kann der Operator Station Server Informationen an den Operator Station Client übermitteln, welchen der Operator gerade bedient und beobachtet. Die von dem Änderungskennzeichen umfassten Informationen können dem Operator beispielsweise in Form einer farblichen und/oder formlichen Hervorhebung dargeboten werden, um die Aufmerksamkeit des Operators gezielt auf die vorgenommenen Änderungen an der Projektierung leiten zu können.

Der Operator Station Server ist dazu ausgebildet, dem Operator die Informationen des empfangenen Änderungskennzeichens nur für diejenigen Komponenten der technischen Anlage visuell darzustellen, für die der Operator über Zugriffsrechte verfügt. Mit anderen Worten sind die dem Operator dargebotenen Informationen individualisiert. Damit lässt sich die Menge der Änderungskennzeichen, die dem Operator visuell dargeboten wird, effizient begrenzen, um den Operator nicht mit unnötigen Informationen zu überlasten. Es kann vorgesehen sein, dass dem Operator die Informationen eines Änderungskennzeichens solange visuell dargeboten werden, bis der Operator eine Kenntnisnahme des Änderungskennzeichens vorgenommen hat.

Vorzugsweise ist das von dem Engineering Station Server an den Operator Station Server übermittelte Änderungskennzeichen derart in dem Operator Station Server hinterlegt, dass der Operator auch mittels eines weiteren Operator Station Servers Zugriff auf das hinterlegte Änderungskennzeichen hat. Durch diese Art der Hinterlegung des Änderungskennzeichens bleibt dieses unabhängig vom Operator Station Server, an dem der Operator mittels eines Operator Station Clients angemeldet ist, erhalten, bis der Operator eine Kenntnisnahme der vorgenommenen Änderungen bestätigt hat. Somit kann auf einfache Art und Weise sichergestellt werden, dass dem individuellen Operatoren keine Änderungen entgehen, die zur Ausübung seiner Tätigkeit wichtig sind. Dem Operator kann dabei auch eine Liste oder Vergleichbares mit den von dem Projekteur vorgenommenen Änderungen visuell dargeboten werden, welche dem Operator unter anderem anzeigt, welche Änderungen er noch nicht zur Kenntnis genommen hat.

Die oben stehende Aufgabe wird zudem gelöst durch ein Verfahren gemäß Anspruch 5.

Bezüglich der Erläuterungen zu dem Verfahrensanspruch und der damit verbundenen Vorteile sei auf die obenstehenden Ausführungen zu dem Leitsystem verwiesen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird. Es zeigen:
- FIG 1: ein erfindungsgemäßes Leitsystem einer technischen Anlage in einer Prinzipskizze;
- FIG 2: ein Anlagenbild eines erfindungsgemäßen Leitsystems gemäß einem ersten Aspekt; und
- FIG 3: ein Anlagenbild eines erfindungsgemäßen Leitsystems gemäß einem zweiten Aspekt.

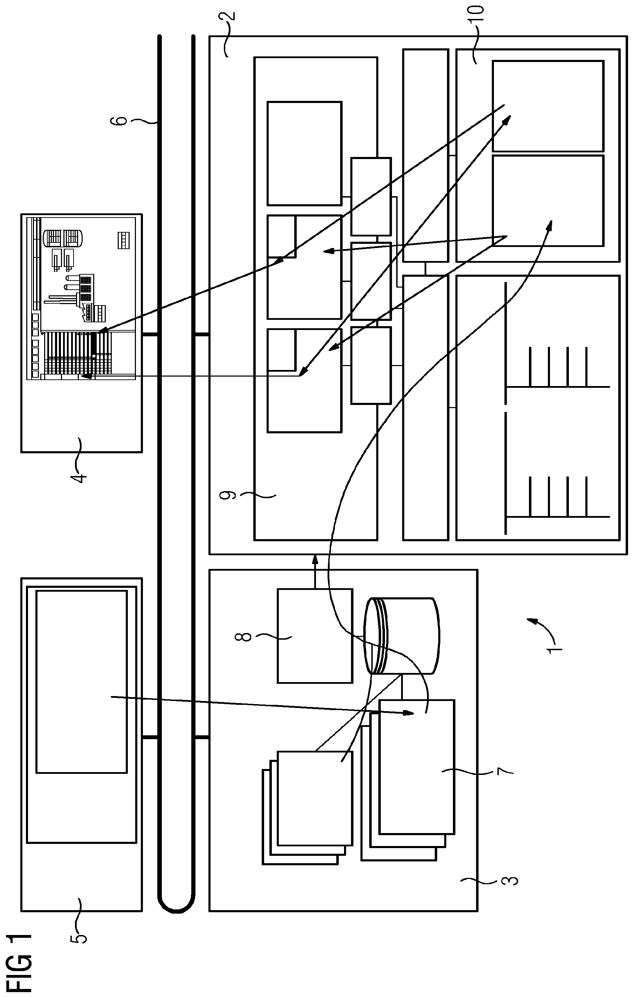

In FIG 1 ist ein Teil eines erfindungsgemäßen Leitsystems 1 einer als verfahrenstechnischen Anlage ausgebildeten technischen Anlage dargestellt. Das Leitsystem 1 umfasst einen Operator Station Server 2, einen Engineering Station Server 3, einen Operator Station Client 4 und einen Engineering Station Client 5. Der Operator Station Server 2, der Engineering Station Server 3, der Operator Station Client 4 und der Engineering Station Client 5 sind über einen Terminalbus 6 miteinander und mit nicht dargestellten weiteren Komponenten des Leitsystems 1 wie einem Prozessdatenarchiv verbunden. Der Terminalbus 6 kann, ohne sich darauf zu beschränken, beispielsweise als Industrial Ethernet ausgebildet sein.

Ein Benutzer bzw. Projekteur der verfahrenstechnischen Anlage hat mittels des Engineering Station Clients 5 im Rahmen einer Projektierung (Engineering) Zugriff auf den Engineering Station Server 3. Mittel eines auf dem Engineering Station Server 3 implementierten speziellen Engineeringwerkzeugs 7 kann der Projekteur eine Projektierung der verfahrenstechnischen Anlage vornehmen. Dabei parametriert, programmiert oder konfiguriert er einzelne Komponenten der technischen Anlage wie Sensoren, Aktoren, Motoren, Ventile und dgl.

Die eigentliche Projektierung wird zusammen mit einem Änderungskennzeichen automatisiert von einem Transferdienst 8 des Engineering Station Servers 3 an einen Visualisierungsdienst 9 des Operator Station Servers 2 übertragen. Dabei umfasst das erstellte Änderungskennzeichen bzw. die erstellen Änderungskennzeichen Informationen darüber, welcher Art die an der Projektierung vorgenommenen Änderungen sind und welche Komponenten der verfahrenstechnischen Anlage von den Änderungen betroffen sind. Es kann dabei für jede Komponente der verfahrenstechnischen Anlage, deren Projektierung verändert worden ist, ein separates Änderungskennzeichen erstellt werden. Es ist aber auch möglich, für einen Verbund aus mehreren Komponenten ein "klammerndes" Änderungskennzeichen vorzusehen.

Zusätzlich umfasst das oder die Änderungskennzeichen vorliegend Kommentierungen des Projekteurs, mit denen er dem Operator die an der Projektierung vorgenommenen Änderungen detailliert erläutert. Der Bezug des Änderungskennzeichens ist der letzte Ladevorgang in den Operator Station Server 2 - es wird damit festgehalten, was sich seit dem letzten Ladevorgang geändert hat.

Der Visualisierungsdienst 9 hinterlegt die empfangenen Informationen des Änderungskennzeichens in einer Benutzerdatenbank 10 des Operator Station Servers 2. In der Benutzerdatenbank 10 sind generell Anwenderprofile und persönliche Einstellungen von Operatoren/Bedienern der verfahrenstechnischen Anlage hinterlegt. Meldet sich der Operator über den Operator Station Client 4 für die Bedienung und Beobachtung an, so können unterschiedliche, mittels des Visualisierungsdienstes 9 auf dem Operator Station Client 4 dargestellte Software-Komponenten wie eine technologische Hierarchie (EQH) oder eine Bildhierarchie auf die Benutzerdatenbank 10 zugreifen,
um zur Laufzeit der verfahrenstechnischen Anlage beispielsweise neue oder geänderte Anlagenbilder in der Bildhierarchie grafisch hervorzuheben (beispielsweise durch eine farbige Umrandung).

Das Leitsystem 1 verfügt vorliegend über eine individuelle Zugriffsrechteverwaltung für die einzelnen Komponenten der verfahrenstechnischen Anlage. So bekommt der jeweilige Operator nur für die Komponenten ein Änderungskennzeichen angezeigt, für die er auch tatsächlich Zugriffsrechte besitzt. Zum Zwecke der Änderungsverfolgung ist die für den jeweiligen Operatoren relevante Menge an Änderungen in dem ihm zugewiesenen Teil der Benutzerdatenbank 10 abrufbar hinterlegt. Öffnet der Operator beispielsweise ein mit einer Änderungsmarkierung versehenes Anlagenbild, so wird die Änderungsmarkierung für diese Anlagenbild aus der Menge an Änderungen in der Benutzerdatenbank 10 gelöscht. Der Operator hat somit die Möglichkeit nach einem Ladevorgang die von einer Änderung betroffenen Komponenten der verfahrenstechnischen Anlage zur Laufzeit wahrzunehmen und den Kontext dazu abzurufen. Da die Änderungskennung in einer individuellen Benutzerdatenbank 10 abgelegt ist, bleibt diese unabhängig von dem Operator Station Server 2, an dem der Operator mittels eines Operator Station Clients 4 angemeldet ist, erhalten, bis der Operator bei sämtlichen Komponenten eine Kenntnisnahme des Änderungskennzeichens bestätigt hat. Damit kann sichergestellt werden,
dass dem individuellen Operatoren keine Änderungen entgehen, die zur Ausübung seiner Tätigkeit wichtig sind.

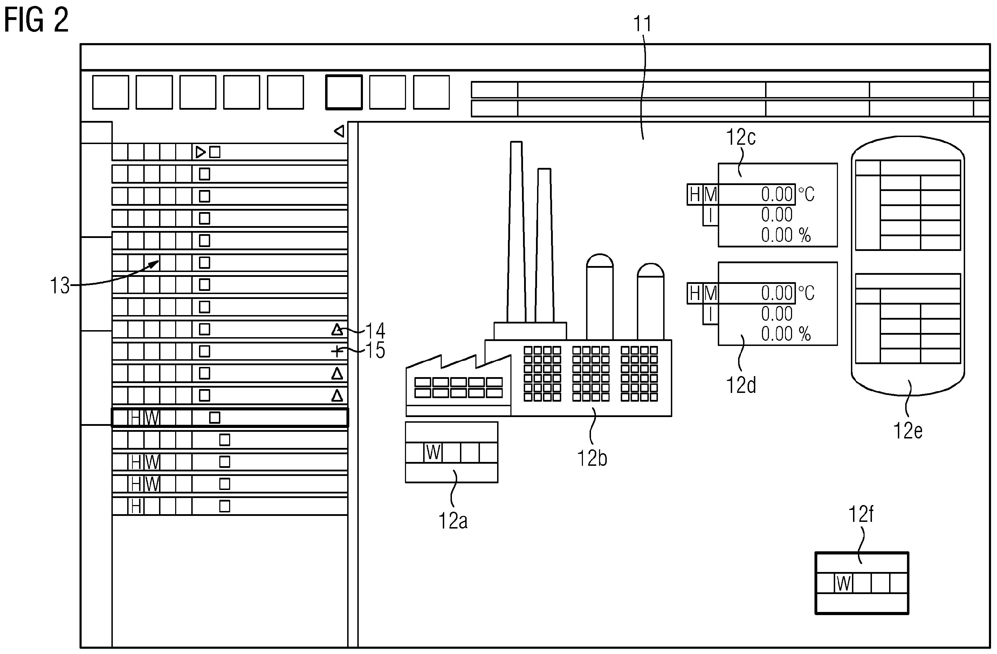

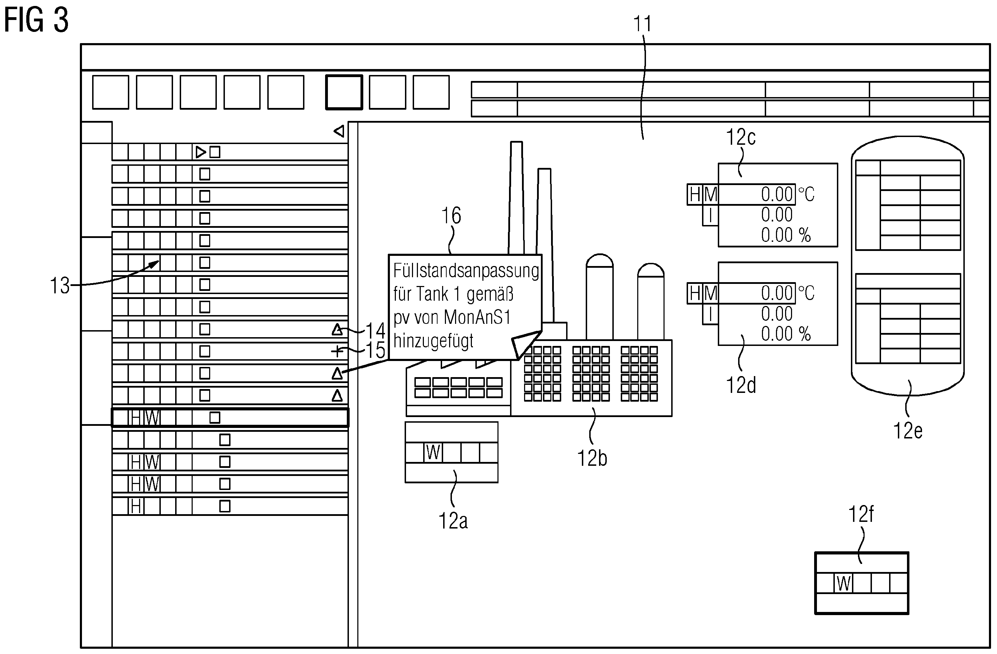

Zur besseren Veranschaulichung der individualisierten Änderungsverfolgung von Projektierungsdaten zur Laufzeit für eine transparentere und effizientere Bedienung und Beobachtung dient das im Folgenden anhand von FIG 2 und FIG 3 erläuterte Ausführungsbeispiel.

In FIG 2 ist ein Anlagenbild 11 der verfahrenstechnischen Anlage dargestellt. Das Anlagenbild 11 umfasst Darstellungen von Prozessobjekten 12a, 12b, 12c, 12d, 12e, 12f, die einzelnen (realen) Komponenten der verfahrenstechnischen Anlage zugeordnet sind bzw. diese digital repräsentieren. Die Projektierung eines der Prozessobjekte 12f bzw. dessen zugehöriger Komponente hat sich im vorliegenden Beispiel gegenüber dem letzten Ladevorgang der Projektierung von dem Engineering Station Server 3 zu dem Operator Station Server 2 geändert. Auf diese Änderung wird der Operator durch eine farbige Umrandung des Prozessobjektes 12f hingewiesen (in FIG 2 durch einen dickeren Rahmen symbolisiert).

Auf der linken Seite in FIG 2 ist eine hierarchisch gegliederte Aneinanderreihung 13 von einzelnen Anlagenbildern 11 dargestellt. Dabei weist ein erstes Änderungskennzeichen 14 (ein Dreieckssymbol) auf ein Anlagenbild 11 hin, welches sich gegenüber dem letzten Stand geändert hat. Ein zweites Änderungskennzeichen 15 (ein Kreuzsymbol) deutet darauf hin, dass das Anlagenbild 11 komplett neu hinzugekommen ist.

Möchte der Operator nun detaillierter erfahren, worauf sich die jeweiligen Änderungen beziehen, so kann er zusätzliche Kommentierungen 16 abrufen, indem er das entsprechende Änderungskennzeichen 14, 15 (Dreieck oder Kreuz) anwählt. Eine solche Kommentierung 16 ist in FIG 3 zu erkennen. Hat der Operator ein mit einem Änderungskennzeichen 14, 15 versehenes Anlagenbild 11 geöffnet, so wird das Änderungskennzeichen 14, 15 von dem Operator Station Client 4 nicht mehr dargestellt. Der Operator kann somit nachvollziehen, welche Änderungen er noch nicht nachvollzogen hat.

## Patentansprüche

1. Leitsystem (1) für eine technische Anlage, insbesondere eine Fertigungs- oder Prozessanlage, das wenigstens einen Engineering Station Server (3) zum Erstellen einer Projektierung für Komponenten der technischen Anlage und wenigstens einen Operator Station Server (2) zum Bedienen und Beobachten der projektierten Komponenten der technischen Anlage aufweist, wobei der Engineering Station Server (3) dazu ausgebildet und vorgesehen ist, ausgehend von einer bereits erstellten Projektierung eine von einem Projekteur an der bereits erstellten Projektierung vorgenommene Änderung mit wenigstens einem Änderungskennzeichen (14, 15) zu versehen, welches die vorgenommene Änderung an der Projektierung **kennzeichnet,**
**dadurch** gekennzeichnet, dass
der Engineering Station Server dazu ausgebildet und vorgesehen ist, das wenigstens eine Änderungskennzeichen (14, 15) zusätzlich zu der geänderten Projektierung an den Operator Station Server (2) zu übertragen, um einem, den Operator Station Server (2) verwendenden Operator Informationen bezüglich der vorgenommenen Änderungen an der Projektierung zu übermitteln,
wobei der Operator Station Server (2) dazu ausgebildet ist, dem Operator die von dem empfangenen Änderungskennzeichen (14, 15) umfassten Informationen visuell darzubieten, um dem Operator eine schnelle Erfassung der von dem Projekteur an der Projektierung der Komponenten der technischen Anlage vorgenommenen Änderungen zu ermöglichen,
und wobei der Operator Station Server (2) dazu ausgebildet ist, dem Operator die Informationen des empfangenen Änderungskennzeichens (14, 15) nur für diejenigen Komponenten der technischen Anlage visuell darzustellen, für die der Operator über Zugriffsrechte verfügt.

2. Leitsystem (1) nach Anspruch 1, bei dem das Änderungskennzeichen (14, 15) Informationen über eine Art der Änderung und die von der Änderung betroffenen Komponenten der technischen Anlage umfasst.

3. Leitsystem (1) nach Anspruch 1 oder 2, bei dem das Änderungskennzeichen (14, 15) Kommentierungen (16) des Projekteurs betreffend die vorgenommenen Änderungen an der Projektierung umfasst.

4. Leitsystem (1) nach einem der vorangegangenen Ansprüche, bei dem das von dem Engineering Station Server (3) empfangene Änderungskennzeichen (14, 15) derart in dem Operator Station Server (2) hinterlegt ist, dass der Operator auch mittels eines weiteren Operator Station Servers Zugriff auf das hinterlegte Änderungskennzeichen (14, 15) hat.

5. Verfahren zum Übertragen einer geänderten Projektierung von Komponenten einer technischen Anlage von einem Engineering Station Server (3) der technischen Anlage zu einem Operator Station Server (2) der technischen Anlage, umfassend:
a) Ändern der Projektierung der Komponenten der technischen Anlage durch einen Projekteur auf dem Engineering Station Server (3),
b) Erzeugen wenigstens eines Änderungskennzeichens (14, 15), das die an der Projektierung der Komponenten vorgenommenen Änderungen kennzeichnet,
c) Übertragen der geänderten Projektierung und des wenigstens einen Änderungskennzeichens (14 ,15) an den Operator Station Server (2),
d) Hinterlegen der geänderten Projektierung und des wenigstens einen Änderungskennzeichens (14, 15) in dem Operator Station Server (2), derart, dass das Änderungskennzeichen (14, 15) von einem Operator des Operator Station Servers (2) abrufbar ist,
e) Visuelles Darbieten der von dem Änderungskennzeichen (14, 15) umfassten Informationen bezüglich der geänderten Komponenten für den Operator durch den Operator Station Server (2), um dem Operator eine schnelle Erfassung der von dem Projekteur an der Projektierung der Komponenten der technischen Anlage vorgenommenen Änderungen zu ermöglichen, wobei der Operator Station Server (2) dem Operator die Informationen des empfangenen Änderungskennzeichens (14 ,15) nur für diejenigen Komponenten der technischen Anlage visuell darstellt, für die der Operator über Zugriffsrechte verfügt.

6. Verfahren nach Anspruch 5, bei dem das Änderungskennzeichen (14, 15) Informationen über eine Art der Änderung und die von der Änderung betroffenen Komponenten der technischen Anlage umfasst.

7. Verfahren nach einem der Ansprüche 5 oder 6, bei dem das Änderungskennzeichen (14 ,15) Kommentierungen (16) des Projekteurs betreffend die vorgenommenen Änderungen an der Projektierung umfasst.

8. Verfahren nach einem der Ansprüche 5 bis 7, bei dem das von dem Engineering Station Server (3) zu dem Operator Station Server (2) übermittelte Änderungskennzeichen (14, 15) derart in dem Operator Station Server (2) hinterlegt wird, dass der Operator auch mittels eines weiteren Operator Station Servers Zugriff auf das hinterlegte Änderungskennzeichen (14, 15) hat.

## Claims

1. Control system (1) for a technical plant, in particular a manufacturing or process plant, which has at least one engineering station server (3) to create a configuration for components of the technical plant and at least one operator station server (2) for operator control and process monitoring of the configured components of the technical plant, wherein the engineering station server (3) is designed and provided, starting from an already created configuration, to provide a change made by a configuration planner to the already created configuration with at least one change indicator (14, 15) which indicates the change made to the configuration,
**characterised in that**
the engineering station server is designed and provided to send the at least one change indicator (14, 15) in addition to the changed configuration to the operator station server (2) in order to send information concerning the changes made to the configuration to an operator using the operator station server (2),
wherein the operator station server (2) is designed to visually present to the operator the information included in the change indicator (14, 15) received, to enable the operator to quickly register the changes made by the configuration planner to the configuration of the components of the technical plant,
and wherein the operator station server (2) is designed to visually display to the operator the information in the received change indicator (14, 15) only for those components of the technical plant for which the operator has access rights.

2. Control system (1) according to claim 1, in which the change indicator (14, 15) comprises information about a type of change and the components of the technical plant affected by the change.

3. Control system (1) according to claim 1 or 2, in which the change indicator (14, 15) comprises comments (16) by the configuration planner concerning the changes made to the configuration.

4. Control system (1) according to one of the preceding claims, in which the change indicator (14, 15) received from the engineering station server (3) is stored in the operator station server (2), such that the operator also has access to the stored change indicator (14, 15) by means of a further operator station server.

5. Method for sending a changed configuration of components of a technical plant from an engineering station server (3) of the technical plant to an operator station server (2) of the technical plant, comprising:
a) change to the configuration of the components of the technical plant by a configuration planner on the engineering station server (3),
b) generation of at least one change indicator (14, 15) identifying the changes made to the configuration of the components,
c) sending the changed configuration and the at least one change indicator (14, 15) to the operator station server (2),
d) storage of the changed configuration and of the at least one change indicator (14, 15) in the operator station server (2), such that the change indicator (14, 15) can be retrieved by an operator of the operator station server (2),
e) visual presentation of the information concerning the changed components included in the change indicator (14, 15) to the operator by the operator station server (2), to enable the operator to quickly register the changes made by the configuration planner to the configuration of the components of the technical plant,
wherein the operator station server (2) visually displays to the operator the information in the received change indicator (14 ,15) only for those components of the technical plant for which the operator has access rights.

6. Method according to claim 5, in which the change indicator (14, 15) comprises information about a type of change and the components of the technical plant affected by the change.

7. Method according to one of claims 5 or 6, in which the change indicator (14, 15) includes comments (16) by the configuration planner concerning the changes made to the configuration.

8. Method according to one of claims 5 to 7, in which the change indicator (14, 15) sent from the engineering station server (3) to the operator station server (2) is stored in the operator station server (2), such that the operator also has access to the stored change indicator (14, 15) by means of a further operator station server.

## Revendications

1. Système (1) de conduite d'une installation technique, en particulier d'une installation de fabrication ou de processus, qui a au moins un engineering station server (3) pour l'établissement d'un projet pour des composants de l'installation technique et au moins un operator station server (2) pour la commande et l'observation des composants en projet de l'installation technique, dans lequel l'engineering station server (3) est constitué et prévu pour, à partir d'un projet déjà établi, munir une modification, effectuée par un projeteur sur le projet déjà établi, d'un au moins une caractéristique (14, 15) de modification, qui caractérise la modification effectuée au projet,
**caractérisé en ce que**
l'engineering station server est constitué et prévu pour transmettre la au moins une caractéristique (14, 15) de modification supplémentairement au projet modifié à l'operator station server (2), afin de transmettre à un opérateur utilisant l'operator station server (2) des informations concernant les modifications effectuées au projet,
dans lequel l'operator station server (2) est constitué pour présenter visuellement à l'opérateur les informations englobées par la caractéristique (14, 15) de modification reçue, afin que l'opérateur puisse détecter rapidement les modifications effectuées par le projecteur au projet des composants de l'installation technique,
et dans lequel l'operator station server (2) est constitué pour ne représenter visuellement à l'opérateur les informations de la caractéristique (14, 15) de modification reçue que pour les composants de l'installation technique, pour lesquels l'opérateur dispose de droits d'accès.

2. Système (1) de conduite suivant la revendication 1, dans lequel la caractéristique (14, 15) de modification comprend de l'information sur un type de la modification et sur les composants de l'installation technique concernés par la modification.

3. Système (1) de conduite suivant la revendication 1 ou 2, dans lequel la caractéristique (14, 15) de modification comprend des commentaires (16) du projeteur concernant les modifications effectuées au projet.

4. Système (1) de conduite suivant l'une des modifications précédentes, dans lequel la caractéristique (14, 15) de modification reçue par l'engineering station server (3) est mise en mémoire dans l'operator station server (2), de manière à ce que l'opérateur ait, également au moyen d'un autre operator station server, accès à la caractéristique (14, 15) de modification mise en mémoire.

5. Procédé de transmission d'un projet modifié de composants d'une installation technique d'un engineering station server (3) de l'installation technique à un operator station server (2) de l'installation technique, comprenant :
a) modification du projet des composants de l'installation technique par un projeteur sur l'engineering station server (3),
b) production d'au moins une caractéristique (14, 15) de modification, qui caractérise les modifications effectuées au projet des composants,
c) transmission du projet modifié et de la au moins une caractéristique (14, 15) de modification à l'operator station server (2),
d) mise en mémoire du projet modifié et de la au moins une caractéristique (14, 15) de modification dans l'operator station server (2), de manière à ce que la caractéristique (14, 15) de modification puisse être appelée par un opérateur de l'operator station server (2),
e) représentation visuelle des informations englobées par la caractéristique (14, 15) de modification en ce qui concerne les composants modifiés pour l'opérateur par l'operator station server (2), afin que l'opérateur puisse détecter rapidement les modifications effectuées par le projecteur sur le projet des composants de l'installation technique, dans lequel l'operator station server (2) ne représente visuellement à l'opérateur les informations de la caractéristique (14, 15) de modification reçue que pour les composants de l'installation, pour lesquels l'opérateur dispose de droits d'accès.

6. Procédé suivant la revendication 5, dans lequel la caractéristique (14, 15) de modification comprend de l'information sur un type de la modification et les composants de l'installation technique concernés par la modification.

7. Procédé suivant l'une des revendications 5 ou 6, dans lequel la caractéristique (14, 15) de modification comprend des commentaires (16) du projeteur concernant les modifications effectuées au projet.

8. Procédé suivant l'une des revendications 5 à 7, dans lequel on met en mémoire, dans l'operator station server (2), la caractéristique (14, 15) de modification transmise de l'engineering station server (3) à l'operator station server (2), de manière à ce que l'opérateur ait accès à la caractéristique (14, 15) de modification mise en mémoire également au moyen d'un autre operator station server.
